# EUROPÄISCHE PATENTSCHRIFT

(11) **EP 1 575 693 B1**
(45) Veröffentlichungstag und Bekanntmachung des Hinweises auf die Patenterteilung: **05.05.2010**
(21) Anmeldenummer: 03776922.1
(22) Anmeldetag: 04.12.2003
(51) Int. Cl.: B01D 53/26, F24C 15/20, F24F 3/14

(54) **VERFAHREN UND VORRICHTUNG ZUM ABFÜHREN UND ENTFEUCHTEN VON LUFT AN EINER KOCHSTELLE**
METHOD AND DEVICE FOR DISCHARGING AND DEHUMIDIFYING AIR IN A COOKING AREA
PROCEDE ET DISPOSITIF POUR EVACUER ET DESHUMIDIFIER L'AIR PRESENT DANS UNE ZONE DE CUISSON

(30) Priorität: 18.12.2002 DE 10259345
(43) Veröffentlichungstag der Anmeldung: 21.09.2005
(73) Patentinhaber: BSH Bosch und Siemens Hausgeräte GmbH, 81739 München (DE)
(72) Erfinder: DAMRATH, Joachim, 89429 Bachhagel (DE); HAUER, Andreas, 82549 Königsdorf (DE); KORNBERGER, Martin, 33611 Bielefeld (DE); LAEVEMANN, Eberhard, 82194 Gröbenzell (DE)
(86) Internationale Anmeldenummer: PCT/EP2003/013722
(87) Internationale Veröffentlichungsnummer: WO 2004/054689

(56) Entgegenhaltungen:
- EP-A- 1 111 311
- WO-A-02/098537
- DE-A- 3 739 145
- DE-A- 10 215 382
- JP-A- 2001 190 925
- US-A- 5 649 428

## Beschreibung

Die vorliegende Erfindung betrifft ein Verfahren zum Abführen von mit Dunst beladener Luft an einer Kochstelle und eine dementsprechende Dunstabzugseinrichtung.

Aus dem Stand der Technik sind zahlreiche Probleme bekannt, die im Zusammenhang mit einer Behandlung von Luft auftreten. Für den Anwender werden derartige Probleme am unmittelbarsten und am deutlichsten bei der Ableitung von Koch- und/oder sonstigen Küchendünsten insbesondere im Bereich einer Kochstelle bemerkbar, so dass dieser Problemkreis im Rahmen der vorliegenden Erfindung vorrangig behandelt wird. Damit findet jedoch kein Ausschluss anderer, dem Fachmann bekannter und ähnlich gelagerter Anwendungsfelder statt, wie beispielsweise die Behandlung von Luft im Bereich fluidgekühlter oder spezieller mit einer Öl-Wasser-Emulsion gekühlter spanabhebender Fertigungsmaschinen in Fabriken.

An Kochstellen tritt generell das Problem auf, dass beim Kochen entstehender Dunst und/oder Gerüche abgeführt werden müssen. Dabei enthält dieser Dunst neben einem sehr hohen Anteil an Wasserdampf auch wrasenhaltige Luft, aus der u.a. Fette und Geruchsstoffe ausfallen können. Als Lösungen sind aus dem Stand der Technik diverse Verfahren zum Abführen von Luft an Kochstellen und dementsprechende Haushaltgeräte bekannt. Bei den Haushaltgeräten lassen sich Dunstabzugshauben von zwei generell unterschiedlichen Funktionsweisen unterscheiden: Ablufthauben und Umlufthauben. Ablufthauben filtern einen großen Teil der in den Kochdünsten enthaltenen Fettpartikel heraus und führen die Luft dann über einen Kanal und einen Mauerkasten oder ähnliche Vorrichtungen ins Freie. Die Wirkung derartiger Ablufthauben ist prinzipiell gut, die Installation hingegen ist häufig problematisch und sehr aufwändig. In vielen Wohnungen ist eine Installation sogar gar nicht möglich, da beispielsweise ein Außenluftanschluss fehlt oder baulich nicht mit vertretbarem Aufwand realisierbar ist. Auf Dauer betrachtet können derartige Ablufthauben jedoch einen Abluftkanal, wie beispielsweise einen Schornstein, durch Ablagerungen aus Wrasen verengen oder gar blockieren oder durch Versottung sogar zerstören.

Umlufthauben führen die abgesaugte Luft zunächst über einen Fettfilter, dann über einen Aktivkohlefilter und entlassen die geförderte Luft wieder in einen Raum, insbesondere wieder in den Küchenraum zurück. Die Wirkung derartiger bekannter Umlufthauben ist vor allem aus folgenden Gründen unbefriedigend: es findet keine Entfeuchtung statt, wodurch beim Kochen die Luftfeuchtigkeit in der Küche schnell ansteigt. Ferner ist die Geruchsbeseitigung durch den Aktivkohlefilter nur für kurze Zeit ausreichend gut, da sich der Aktivkohlefilter vor allem durch feine Fettpartikel und Wassermoleküle rasch zusetzt, die der Fettfilter nicht erfasst hat. Damit verliert der Aktivkohlefilter seine Wirkung und muss dementsprechend entweder häufig ausgetauscht werden.

Eine rein mechanisch wirkende Vorrichtung zur Minderung des Wrasenanteils in der Luft ist aus der DE 299 03 794 U1 bekannt. Hierin wird ein mechanisches Abscheidegitter zum Abscheiden von Flüssigkeits- und/oder Feststoffpartikeln vorgeschlagen, das im Wesentlichen auf dem Aufbau eines stabilisierten Labyrinth-Systems zum verbesserten Auffangen und Abführen von Flüssigkeiten beruht. Die in der DE 299 03 794 U1 beschriebene gute Wirkung beschränkt sich jedoch im Wesentlichen auf ein Herausfiltern von relativ großen Flüssigkeits- und Feststoffpartikeln, das zudem ein erhöhtes Strömungsgeräusch hervorruft. Eine Funktion ist nur im sog. "Nebelgebiet" vorhanden. Das Abscheiden von Feuchtigkeit aus einem Gemisch aus Luft und Wasserdampf ist mit dieser Vorrichtung jedoch nicht möglich.

Aus der DE 299 23 124 U1 ist eine Vorrichtung bekannt, die zum Kondensieren des Wasserdampfanteils der Luft einen Wärmetauscher in einem Querstrom- oder Gegenstrombetrieb vorsieht, der mit einer Kühlluft betrieben wird. Dieser Vorrichtung muss aufgrund eines relativ geringen Temperaturunterschieds zwischen der Luft und der Kühlluft zur Verlängerung einer jeweiligen Kühlstrecke stets ein Labyrinth vorstehen. Mit dieser Vorrichtung ist im allgemeinen der Taupunkt der feuchten Luft nicht zu erreichen. Die Abscheidewirkung von Wasser ist damit unzureichend. Weiterhin führt diese Lösung einerseits zu hohen Strömungsgeräuschen, andererseits auch zu einem sehr komplexen Innenaufbau mit Problemen bei der Herstellung und der Reinigung.

Die DE 100 20 205 A1 schlägt hingegen eine aktive Kühlung der Luft in einer Dunstabzugshaube vor, die über einen gegen ein Vereisen geschützten Wärmetauscher mit einer geregelten Kältemaschine durchgeführt wird. Eine Bereitstellung einer ausreichenden Kühlleistung ohne Vereisung, insbesondere in einer Ruhestellung erfordert in einer derartigen Vorrichtung angesichts der großen zu behandelnden Volumina an Luft eine relativ groß dimensionierte Kältemaschine. Damit wirkt sich in dieser Lösung neben der Baugröße auch ein hoher Bedarf an elektrischer Leistung während des Betriebes einer derartigen Dunstabzugshaube nachteilig aus.

Weiterhin ist in der DE 37 39 145 A1 eine Vorrichtung zum Entfeuchten von Räumen beschrieben. Bei dieser Vorrichtung wird ein Absorber und ein diesem nachgeschalteter Kondensator verwendet, der im Regenrationsbetrieb verwendet wird. Die Strömung im Regenerationsbetrieb wird hierbei durch freie Konvektion erzielt. Diese Art der Entfeuchtung und Regenration ist für den Einsatz über einer Kochstelle, wo ein hohes Aufkommen von Wasser und Wasserdampf zu erwarten ist nicht ausreichend.

JP-A-2001-190925 offenbart ein Luftentfeuchtungsverfahren, bei dem die Luft zur Regenerierung des Sorptionsmittels in zwei Teilströme geteilt wird.

Weiterhin ist in der WO 02/098537 A2 ein Verfahren und eine Vorrichtung zum Filtern verunreinigter Luft beschrieben. Hierbei wird zum Trocknen der Luft ein Zeolith, ein Silicatgel und/oder anorganisches Salz verwendet. Bei Erreichen eines Sättigungsgrades des Filters zur Lufttocknung muss dieser ausgewechselt werden.

Es ist Aufgabe der vorliegenden Erfindung, ein Verfahren zum Abführen von mit Dampf beladener Luft an Kochstellen und eine dementsprechende Vorrichtung mit verbesserter Wasserabscheidung sowie verbesserter Effizienz zu schaffen.

Diese Aufgabe wird erfindungsgemäß durch ein Verfahren mit den Merkmalen von Anspruch 1 und eine Dunstabzugseinrichtung gemäß Anspruch 15 gelöst. Vorteilhafte Weiterbildungen der Erfindung sind Gegenstand der jeweiligen Unteransprüche.

Ein erfindungsgemäßes Verfahren bzw. eine erfindungsgemäße Vorrichtung zum Abführen von Luft von einer Kochstelle zeichnet sich dadurch aus, dass der Luftstrom durch ein Sorptionsmittel (Trocknungsmittel) zum Sorbieren von im Luftstrom befindlichem Wasser bzw. Wasserdampf geleitet wird, und dass das Sorptionsmittel wieder regeneriert wird.

Hierdurch ist es auf einfache Weise möglich, Wasser, insbesondere als in dem Luftstrom gasförmig vorhandenes Wasser (feuchte Luft), in relativ großen Mengen zu binden, ohne des Sorptionsmittels angeordnet ist, abgeschieden. Besonders vorteilhaft ist es, wenn ein Sorptionsmittel verwendet wird, das nicht nur Wasser, sondern auch Geruchsstoffe sorbieren kann.

In einer vorteilhaften Ausführung wird der Luftstrom, der aus einem Raum oberhalb einer Kochstelle, insbesondere einer Küche abgeführt wird, nach dem Entfeuchten und nach dem Abscheiden von weiteren Stoffen wie Fett, Öl und Geruchsstoffe in diesen Raum zurückgeführt, so dass sich das vorliegende Verfahren besonders für eine Umlufthaube eignet.

In einer vorteilhaften Ausführung wird der Luftstrom stromauf des Sorptionsmittels in einen ersten und einen zweiten Teilluftstrom aufgeteilt. Der erste Teilluftstrom wird dann durch das Sorptionsmittel geleitet und der zweite Teilluftstrom um das Sorptionsmittel herum geleitet. Stromab des Sorptionsmittels werden dann der erste und der zweite Teilluftstrom zusammengeführt und in den Raum zurückgeleitet. Indem das Volumenstromverhältnis zwischen dem ersten Teilluftstrom und dem zweiten Teilluftstrom mittels einer Luftstrom-Teilungseinrichtung, die bevorzugt durch ein als eine Luftklappe ausgebildetes Ventil, das stromab des Sorptionsmittels angeordnet ist, einstellbar ist, kann der stromab des Sorptionsmittels zusammengeführte Luftstrom auf einen Feuchtigkeitsgrad eingestellt werden, der einem Feuchtigkeitsgrad ohne Kochvorgang entspricht. Da der erste Teilluftstrom, der durch das Sorptionsmittel geleitet wird, nahezu vollständig entfeuchtet wird und der zweite Teilluftstrom, der um das Sorptionsmittel herum geleitet wird, übermäßig viel Feuchtigkeit enthält, kann mittels der Luftstrom-Teilungseinrichtung der Feuchtigkeitsgrad, den der Luftstrom beim Verlassen der Dunstabzugseinrichtung aufweist, nach Wunsch oder nach Erfordernis von trockener als die umgebende Raumluft bis feuchter als die umgebende Raumluft eingestellt werden.

Je nachdem welches Mittel als Sorptionsmittel verwendet wird, erwärmt sich das Sorptionsmittel beim Sorbieren von Wasser aus der durchströmenden Luft relativ stark. Indem der zweite Teilluftstrom, der in etwa Raumtemperatur hat, um das Sorptionsmittel herum geleitet wird und stromab des Sorptionsmittels wieder mit dem ersten Teilluftstrom, der das Sorptionsmittel passiert hat und dadurch u. U. stark erwärmt wurde, vereint wird, wird der vereinigte Luftstrom stromab des Sorptionsmittels wieder auf eine verringerte Temperatur abgekühlt, die in Abhängigkeit vom Volumenstromverhältnis der beiden Teilluftströme zueinander nur geringfügig über der Raumtemperatur liegt. Hierdurch ist es möglich, dass beim Dunstabzugsbetrieb der die Dunstabzugseinrichtung verlassende Luftstrom nicht nur eine angemessene Feuchtigkeit sondern auch eine angepasste Temperatur hat.

In einer vorteilhaften Ausführungsform wird das im Luftstrom befindliche Wasser bzw. Wasserdampf z.B. mittels CaCl₂ und/oder LiCl und/oder Silicagel und/oder Zeolith und/oder SWS (Selektives-Wasser-Sorben) sorbiert. In einer vorteilhaften Ausführung der Erfindung wird das Sorptionsmittel durch Erwärmen auf die Temperatur, die zum Desorbieren von Wasser aus dem jeweils verwendeten Sorptionsmittel geeignet ist, regeneriert. Die Regenerierung des Sorptionsmittels erfolgt bevorzugt dann, wenn kein mit Wasserdampf beladener Luftstrom von der Kochstelle abgeführt werden muss, wie zum Beispiel in der Nacht. Zum Regenerieren wird ein Regenerierungsluftstrom durch das Sorptionsmittel während des Regenerierungsvorgangs mittels des Lüfters erzeugt. Der Regenerierungsluftstrom ist dabei um ein Vielfaches geringer als der Luftstrom beim Dunstabzugsbetrieb. Das Regenerieren des Sorptionsmittels kann somit sehr geräuscharm und unbemerkt für den Benutzer durchgeführt werden.

In einer vorteilhaften Ausführung kann das Sorptionsmittel direkt mittels im Sorptionsmittel eingebetteter Heizschlangen oder auch indirekt, bevorzugt durch Mikrowellenstrahlung, die auf Wasser abgestimmt ist, auf die erforderliche Desorptionstemperatur aufgeheizt werden. Weiterhin kann das Sorptionsmittel auch indirekt durch einen erwärmten Regenerierungsluftstrom, der mittels einer stromauf des Sorptionsmittels angeordneten Heizeinrichtung erwärmt wird, auf die erforderliche Desorptionstemperatur aufgeheizt werden. Eine Heizschlange kann bevorzugt als elektrischer Heizdraht oder auch als ein fluidführendes Rohr ausgebildet sein, das beispielsweise an die Gebäudeheizung angeschlossen werden kann.

In einer vorteilhaften Ausführung kann der mit erhöhter Feuchtigkeit beladene Regenerierungsluftstrom wieder in den Raum zurückgeführt werden. Dies ist deshalb unproblematisch, da der Regenerierungsvorgang sehr langsam und daher über einen sehr großen Zeitraum abläuft. Damit wird dem Raum die Feuchtigkeit in einer geringen Dosis pro Zeiteinheit zugeführt. Insbesondere in Wintermonaten, wenn durch das Beheizen der Räume die Luft sehr trocken wird, kann mit dem Regenerierungsluftstrom die Raumluft über einen längeren Zeitraum geringfügig befeuchtet und damit auf eine angenehme Luftfeuchtigkeit gebracht werden.

Eine Kondensationseinrichtung ist im Regenerierungsluftstrom stromab des Sorptionsmittels zum Auskondensieren der im Regenerierungsluftstrom befindlichen Feuchtigkeit vorgesehen.

Die Kondensationseinrichtung hat hierzu bevorzugt einen Wärmetauscher, der als Querstrom- oder Gegenstromwärmetauscher ausgeführt sein kann. Der Wärmetauscher kann mit normaler Raumluft, oder Außenluft oder Wasser, bevorzugt aus dem Hauswassersystem oder mittels einer Wärmepumpe, bevorzugt eines Kältekreislaufs oder eines Peltierelements gekühlt werden.

Der Regenerierungsluftstrom wird stromauf des Sorptionsmittels in einen ersten und einen zweiten Regenerierungsteilluftstrom aufgeteilt. Der erste Regenerierungsteilluft wird durch das Sorptionsmittel und der zweite Regenerierungsteilluftstrom wird um das Sorptionsmittel herum geführt. Stromab des Sorptionsmittels wird der erste Regenerierungsteilluftstrom über eine Kondensationseinrichtung und über eine Verbindungsleitung auf die Eintrittsseite des Sorptionsmittels zurückgeführt. Der zweite Regenerierungsteilluftstrom wird als Kühlluftstrom durch die Kondensationseinrichtung geleitet und dann in den Raum zurückgeführt. Hierdurch wird der erste Regenerierungsteilluftstrom, der durch das Sorptionsmittel geleitet wird, in einem Kreislauf geführt, und der zweite Regenerierungsteilluftstrom wird zum Kühlen der Kondensationseinrichtung verwendet und im Anschluss daran mit einer erhöhten Temperatur gegebenenfalls in den Raum zurückgeleitet.

In einer weiteren vorteilhaften Ausführung wird der Teilluftstrom, der durch das Sorptionsmittel geführt wurde, nicht im Kreislauf geführt, sondern nach dem Auskondensieren mit dem zweiten Luftstrom vermischt.

In einer vorteilhaften Ausführung wird das in der Kondensationseinrichtung kondensierte Wasser in einer Rinne oder Wanne aufgefangen und entweder über einen Ablauf abgeleitet oder in einem Sammelbehälter gesammelt.

In einer vorteilhaften Ausführung umfasst die Kondensationseinrichtung einen Abschnitt der Außenwand des Gehäuses, wobei die Kondensationseinrichtung durch freie Konvektion der Raumluft an der Außenseite der Außenwand gekühlt wird und auf der Innenseite der Außenwand Wasser aus dem Regenerierungsluftstrom auskondensiert wird.

In einer vorteilhaften Ausführung der Erfindung ist die Kondensationseinrichtung mit einem zweiten Lüfter versehen, der Umgebungsluft zum Kühlen der Kondensationseinrichtung durch die Kondensationseinrichtung fördert.

In einer vorteilhaften Ausführung ist das Sorptionsmittel als Schüttgut in einem luftdurchlässigen Behälter, als poröser Formkörper oder als Anordnung mehrerer Formkörper oder Schüttgutbehälter in Strömungsrichtung entweder hintereinander oder parallel angeordnet. Bevorzugt sind mehrere in Form von plattenartigen, flachen Schüttgutbehältern oder Formkörpern in Strömungsrichtung hintereinander angeordnet, so dass auf einfache Weise die in Strömungsrichtung zuerst mit dem Luftstrom in Kontakt kommenden flachen Schüttgutbehälter oder Formkörper ausgetauscht werden können, da die in Strömungsrichtung zuerst mit Luftströmung in Berührung kommenden Sorptionsmittel durch Fette und Öle, die durch den vorgeschalteten Fettabscheider noch nicht abgeschieden wurden, kontaminiert werden können. In einer vorteilhaften Ausführung ist das Sorptionsmittel an einem porösen Trägermaterial, wie einem offenporigen Schwamm, einem Vliesmaterial oder einem Textil angebracht, wobei das Trägermaterial zur Ausbildung einer großen Oberfläche bevorzugt gewellt oder auch wabenartig ausgebildet ist.

Nachfolgend werden einige Ausführungsbeispiele der Erfindung anhand der Zeichnungen näher erläutert. In der Zeichnung zeigen:
- Fig. 1: eine schematische Darstellung durch eine nicht erfindungsgemäße Dunstabzugseinrichtung;
- Fig. 2: eine schematische Darstellung einer nicht erfindungsgemäßen Dunstabzugseinrichtung;
- Fig. 3: eine schematische Darstellung einer nicht erfindungsgemäßen Dunstabzugseinrichtung;
- Fig. 4: eine schematische Darstellung einer Dunstabzugseinrichtung gemäß einem Ausführungsbeispiel in der Betriebsposition absaugen;
- Fig. 5: eine schematische Darstellung der Dunstabzugseinrichtung gemäß Figur 4 in der Regenerierungsphase.

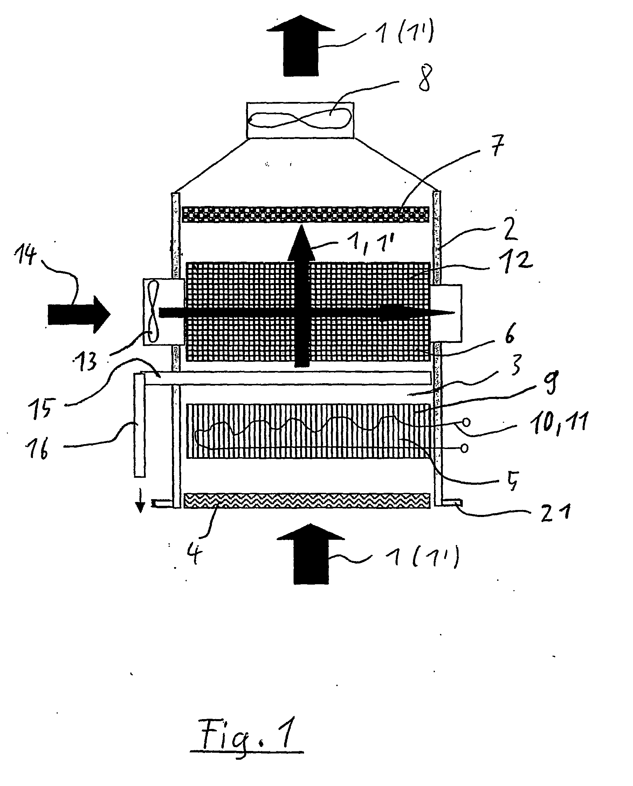

Figur 1 zeigt eine Dunstabzugseinrichtung, die bevorzugt über einer nicht weiter dargestellten Kochstelle zum Abführen eines mit Kochdämpfen und Wrasen beladenen Luftstroms 1 angeordnet wird. Die Dunstabzugseinrichtung hat ein Gehäuse 2, das eine Hauptleitung 3 für den Luftstrom 1 hat. Die Dunstabzugseinrichtung gemäß Figur 1 hat in Strömungsrichtung des Luftstroms 1 zunächst einen Fettfilter 4, dann ein Sorptionsmittel 5, dann eine Kondensationseinrichtung 6, im Anschluß daran einen Geruchsfilter 7 und dann einen Lüfter 8 vorgesehen. Zur besseren Zufuhr der Kochdämpfe zur Dunstabzugseinrichtung kann ein Schirm oder eine Haube 21 vorgesehen sein.

Der Fettfilter 4 ist bevorzugt als Streckmetallfilter oder als Wirbelstromfilter bzw. Labyrinthfilter oder auch als Vliesfilter ausgebildet. Der Fettfilter 4 dient dazu, im Luftstrom befindliches Fett, Öl und Wassertröpfchen aus dem Luftstrom 1 abzuscheiden.

Als Sorptionsmittel zum Absorbieren bzw. Adsorbieren von Wasser wird im vorliegenden Ausführungsbeispiel CaCl₂ oder LlCL oder Silicagel oder Zeolith verwendet. Das Sorptionsmittel 5 ist bevorzugt auf ein wabenförmiges Trägermaterial 9 aufgetragen oder auch als Schüttgutbehälter ausgebildet. Im Sorptionsmittel 5 ist eine Heizeinrichtung 10 bevorzugt in Form einer elektrischen Heizwendel vorgesehen. Stromab des Sorptionsmittels ist eine Kondensationseinrichtung 6, die vorliegend als Querstromwärmetauscher ausgebildet ist, vorgesehen. Zur Kühlung des Querstromwärmetauschers ist ein zusätzlicher, zweiter Lüfter 13 vorgesehen, der einen Kühlluftstrom 14 durch den Querstromwärmetauscher aufbaut. Weiter stromab der Kondensationseinrichtung 6 ist der Geruchsfilter 7 vorgesehen, der vorliegend bevorzugt als Aktivkohlefilter ausgebildet ist. Unterhalb der Kondensationseinrichtung 6 ist eine Rinne 15 ausgebildet, die Kondenswasser aus der Kondensationseinrichtung 6 auffängt und sammelt und über einen Ablauf 16 abführt. Der Ablauf 16 kann mit einem Siphon (nicht dargestellt) oder einem Sammelbehälter (nicht dargestellt) verbunden sein.

Die gemäß Figur 1 dargestellte Dunstabzugseinrichtung hat im wesentlichen zwei Betriebsarten, eine normale Betriebsart zum Abführen und Reinigen von Luft über einer Kochstelle und eine Regenerierungsbetriebsart zum Regenerieren des Sorptionsmittels 5. Bei der normalen Betriebsart wird der Lüfter 8 mit einer hohen Luftvolumenleistung betrieben und Wrasen oberhalb der Kochstelle über den Fettfilter 4, das Sorptionsmittel 5 und den Geruchsfilter 7 abgesaugt und wieder in den Raum zurückgeleitet, in dem sich die Kochstelle befindet. Bei dieser Betriebsart wird zunächst Fett, Öl und Kondensat im Fettfilter 4 abgeschieden, anschließend wird die Luft im Sorptionsmittel getrocknet und im Anschluss daran werden aus der getrockneten und von Fett und Kondensat befreiten Luft eventuell noch verbliebene Geruchsstoffe mittels des Geruchsfilters 7 entfernt. Zur Sorption von Wasser muss das Sorptionsmittel 5 vorentfeuchtet bzw. desorbiert sein.

Im vorliegenden Fall wird bevorzugt die sog. Chemiesorption angewendet, bei der Wassermoleküle aus der Gasphase an eine feste Phasengrenze gebunden und durch Hydratation chemisch gespeichert werden. Als Sorptionsmittel 5 eignen sich besonders CaCl₂ oder LiCl, LiCl ist besonders vorteilhaft, da sein Taupunkt bis zu -30°C beträgt und eine Wasseraufnahmekapazität von bis zu 4 : 1 möglich ist, d.h. 1 kg LiCL kann 4 l Wasser binden. Bei der normalen Betriebsart zur Erzeugung eines Luftstroms 1 ist die Heizeinrichtung 10 und normalerweise auch die Kondensationseinrichtung 6 nicht in Betrieb.
Die Regenerierungsbetriebsart wird in Gang gesetzt, wenn die Dunstabzugseinrichtung nicht in der normalen Betriebsart, d.h. zum Absaugen von Wrasen, verwendet wird. Dies ist insbesondere der Fall, wenn nicht gekocht wird, so zum Beispiel in der Nacht. Über eine nicht dargestellte Steuerung kann vorprogrammiert werden, zu welchen Zeiten ein Regenerierungsbetrieb im Bedarfsfall aufgenommen werden soll.

Beim Regenerierungsbetrieb wird der Lüfter 8 in einer sehr kleinen Stufe betrieben, um lediglich eine kleine Menge an Luft bzw. einen Regenerierungsluftstrom 1' durch die Dunstabzugseinrichtung zu fördern. Die Heizeinrichtung 10 in Form der elektrischen Heizwendel 11 wird derart betrieben, dass das Sorptionsmittel 5 auf eine sog. Desorptionstemperatur aufgeheizt wird. Die Desorptionstemperatur hängt vom jeweils verwendeten Sorptionsmittel ab. Der Regenerierungsluftstrom 1' nimmt das aus dem Sorptionsmittel 5 desorbierte Wasser mit. Wenn der Regenerierungsluftstrom 1' stromab des Sorptionsmittels 5 die Kondensationseinrichtung 6 passiert, wird das im Regenerierungsluftstrom 1' befindliche Wasser größtenteils auskondensiert und fließt über die Rinne 15 und den Ablauf 16 ab. Der Regenerierungsbetrieb kann bevorzugt über einen langen Zeitraum, wie zum Beispiel fünf bis acht Stunden betrieben werden.

Die Dunstabzugseinrichtung gemäß Figur 1 kann beim Regenerierungsbetrieb des Sorptionsmittels 5 auch ohne Kondensationseinrichtung 6 versehen sein oder sie kann bei abgeschalteter Kondensationseinrichtung 6 betrieben werden, wenn es gewünscht ist, den Regenerierungsbetrieb als Luftbefeuchtungseinrichtung zu verwenden.

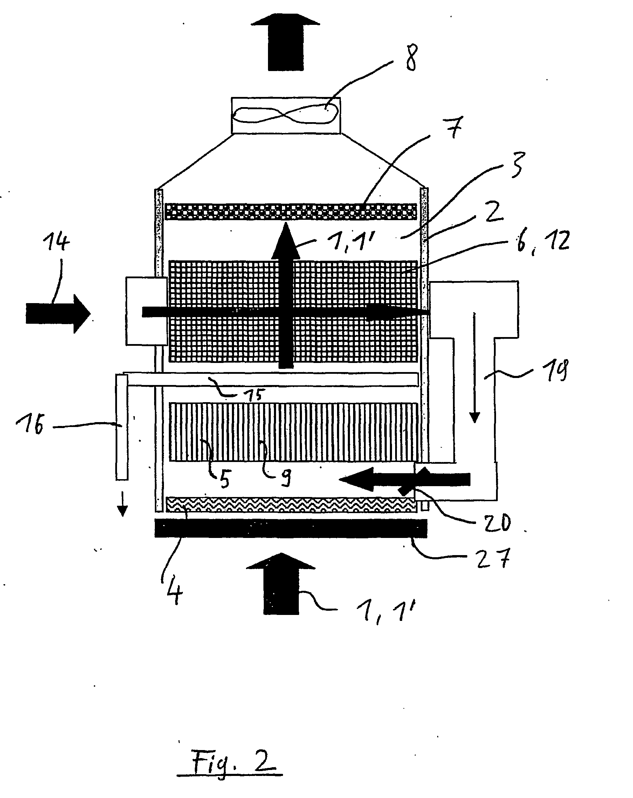

Bei den nachstehend beschriebenen Ausführungsbeispielen nach Figur 2 bis 5 wird lediglich auf die Unterschiede und Ergänzungen gegenüber dem Ausführungsbeispiel gemäß Figur 1 eingegangen.

Die gemäß Figur 2 dargestellte Dunstabzugseinrichtung hat für den Regenerierungsbetrieb des Sorptionsmittels eine Wärmepumpe (nicht dargestellt), z.B. nach der Kältekreislauftechnologie oder der Peltiertechnologie. Wobei kalte Seite der Wärmepumpe zum Kühlen der Kondensationseinrichtung 6 verwendet und die warme Seite der Wärmepumpe zum Heizen des Sorptionsmittels 5 verwendet wird. Auf eine zusätzliche Heizeinrichtung 10 kann verzichtet werden, wenn die Heizkapazität der warmen Seite der Wärmepumpe zum Desorbieren des Sorptionsmittels 5 ausreicht. Bei Verwendung eines Peltierelements als Wärmepumpe wird die an der warmen Seite des Peltierelements anfallende Wärme über den Kühlluftstrom 14 über eine Verbindungsleitung 19 und eine in Form einer Klappe ausgebildeten Ventileinrichtung 20 stromauf des Sorptionsmittels 5 dem Sorptionsmittel 5 zugeführt.

Wenn die Dunstabzugseinrichtung als eine sog. Flachschirmhaube mit einem ausziehbaren Schirmschieber (27) ausgebildet ist, dann kann die in Form einer Klappe ausgebildete Ventileinrichtung 20 durch das Einfahren des Schirmschiebers bzw. bei eingefahrenem Schirmschieber geöffnet werden, so dass die Steuerung der Dunstabzugseinrichtung ein Bereitschaftssignal für den Start des Regenerierungsbetriebs durch das Einfahren des Schirmschiebers erhält. In der Kochphase wird der Schirmschieber geöffnet, der Hauptansaugweg freigegeben und die Ventileinrichtung 20 verschlossen. Dieses System kann auch als Raumluftentfeuchter in der Küche genutzt werden, wenn die Wärmepumpe (nicht dargestellt) ausgeschaltet bleibt und das Sorptionsmittel 5 bereits vorgetrocknet war.

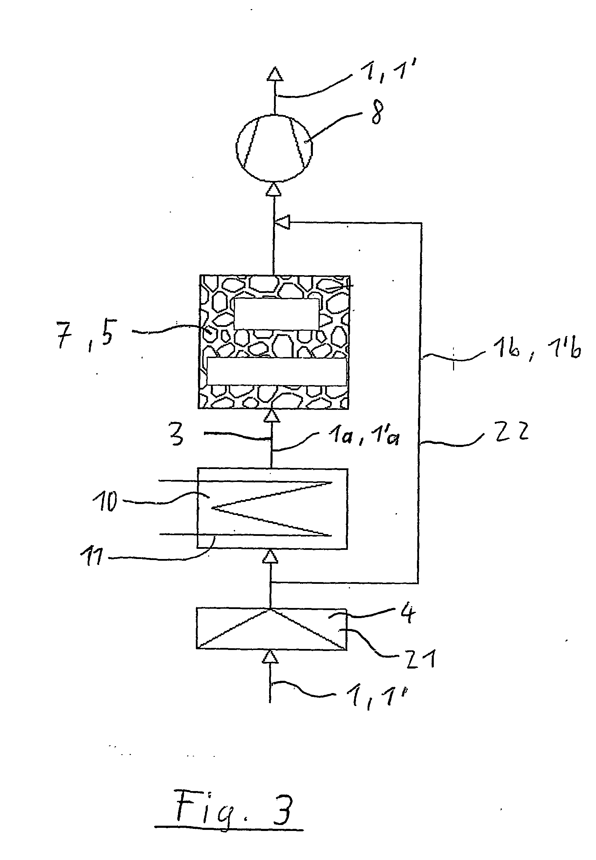

Gemäß Figur 3 ist eine weitere vorteilhafte Ausführung der Dunstabzugseinrichtung dargestellt. Die Unterschiede gegenüber der in Figur 1 und 2 dargestellten Dunstabzugseinrichtung bestehen darin, dass als Sorptionsmittel bevorzugt Zeolith verwendet wird, und dass sich im Luftstrom 1 bzw. Regenerierungsluftstrom 1' stromauf die Heizeinrichtung 10 als eine separate Heizeinrichtung befindet. Weiter stromauf der Heizeinrichtung 10 befindet sich die Haube 21, die den Fettfilter 4 aufnimmt. Stromab des Fettfilters 4 zweigt vom Luftstrom 1 eine Umgehungsleitung 22 ab, so dass der Luftstrom 1 mittels einer Luftstrom-Teilungseinrichtung in einen ersten Teilluftstrom 1a und in einen zweiten Teilluftstrom 1 b aufgeteilt wird. Der erste Teilluftstrom 1 a wird durch das Sorptionsmittel 5 geleitet. Der zweite Teilluftstrom 1b wird über die Umgehungsleitung 22 um das Sorptionsmittel 5 herumgeleitet. Stromab des Sorptionsmittels 5 wird der erste Teilluftstrom 1 a und der zweite Teilluftstrom 1 b wieder vereinigt. Das Volumenstromverhältnis zwischen dem ersten Teilluftstrom 1a und dem zweiten Teilluftstrom 1b beträgt beispielsweise bevorzugt 3:1, d.h. drei Volumenteile des Luftstroms 1 werden über die Umgehungsleitung 22 und ein Volumenteil wird durch das Sorptionsmittel 5 geleitet.

Die Luftstrom-Teilungseinrichtung wird bevorzugt dadurch ausgebildet, dass die Strömungswiderstände zwischen der Luftumgehungsleitung 22 und dem Sorptionsmittel 5 derart eingestellt werden, dass die gewünschte Aufteilung in einen ersten Teilluftstrom 1a und einen zweiten Teilluftstrom 1 b erzielt wird. Alternativ hierzu können auch einstellbare Klappen oder Ventile in der Umgehungsleitung oder in der durch das Sorptionsmittel 5 führenden Hauptleitung 3 angeordnet sein.

Der Teilluftstrom 1 b, der durch das Sorptionsmittel geleitet wird, wird bei Verwendung von Zeolith als Sorptionsmittel 5 nahezu restlos entwässert. Bei der Absorption von Wasser erwärmt sich das Zeolith sehr stark. Diese Reaktionswärme des Zeoliths wird über den zweiten Teilluftstrom 1b abgeführt. Der erste Teilluftstrom 1a verlässt damit das Sorptionsmittel 5 nahezu vollständig entfeuchtet, jedoch relativ heiß. Um jedoch einen Luftstrom 1 mit einer erträglichen Temperatur und einer Luftfeuchte, die bevorzugt der normalen Umgebungsluftfeuchte entspricht, in den Raum zurückzuführen, wird der zweite Teilluftstrom 1 b mit dem ersten Teilluftstrom 1 a, der lediglich den Fettfilter 4 passiert hat und eine erhöhte Luftfeuchtigkeit jedoch eine niedrigere Temperatur als der Teilluftstrom 1a aufweist, vermischt und in den Raum zurückgeleitet.

Der Regenerierungsbetrieb bei der Ausführung der Dunstabzugseinrichtung nach Figur 3 wird nachstehend beschrieben. Der durch den Lüfter 8 erzeugte Regenerierungsluftstrom 1' ist um ein vielfaches kleiner als beim Dunstabsaugbetrieb. Der Regenerierungsluftstrom 1' wird, wie beim Absaugbetrieb, an der Verzweigung der Umgehungsleitung 22 aufgeteilt in einen ersten Regenerierungsteilluftstrom 1'a, der über die Heizungseinrichtung 10 und das im vorliegenden Fall bevorzugt als Zeolith ausgebildete Sorptionsmittel 5 geleitet wird und in einen zweiten Regenerierungsteilluftstrom 1'b, der durch die Umgehungsleitung 22 strömt. Stromab des Sorptionsmittels 5 werden die beiden Regenerierungsteilluftströme 1'a und 1'b wieder zusammengeführt und in den Raum über den Lüfter 8 zurückgeführt. Da die Regenerierungstemperatur für Zeolith als Sorptionsmittel 5 relativ hoch ist (ca. 250°C) verlässt der durch das Sorptionsmittel 5 geleitete erste Regenerierungsteilluftstrom 1'a das Sorptionsmittel 5 gegen ende des Vorgangs mit einer relativ hohen Temperatur und einem erhöhten Feuchtigkeitsgehalt. Nach dem Vermischen des ersten Regenerierungsteilluftstrom 1'a mit dem zweiten Regenerierungsteilluftstroms 1'b, der über die Umgehungsleitung 22 geleitet wird, werden wieder erträgliche Temperaturen und eine insgesamt verminderte Feuchtigkeit im Gesamtluftstrom erreicht. Das Aufteilungsverhältnis zwischen erstem Regenerierungsteilluftstrom 1'a und zweitem Regenerierungsteilluftstrom 1'b entspricht dem gleichen Verhältnis wie beim Absaugbetrieb, nämlich bevorzugt 1/4 zu 3/4 zwischen erstem Regenerierungsteilluftstrom 1'a und zweitem Regenerierungsteilluftstrom 1'b.

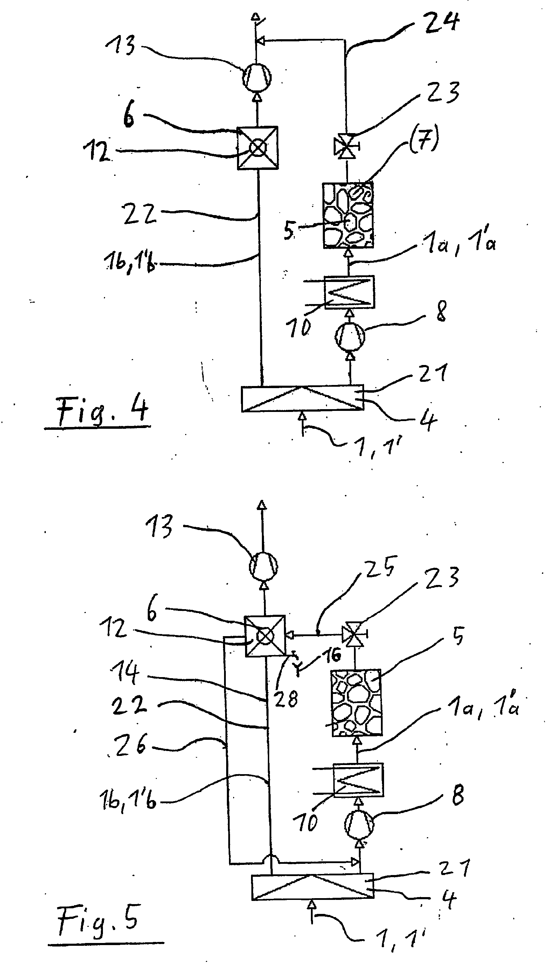

Gemäß Figur 4 und 5 ist eine weitere Ausführung der Dunstabzugseinrichtung dargestellt. Diese Ausführung ist eine Abwandlung gemäß der Dunstabzugseinrichtung nach Figur 3, bei der ebenso als Sorptionsmittel 5 bevorzugt Zeolith verwendet wird. Die Dunstabzugseinrichtung nach Figur 4 hat im Unterschied zur Dunstabzugseinrichtung nach Figur 3 in der Umgehungsleitung 22 eine Kondensationseinrichtung 6 und stromab der Kondensationseinrichtung den Lüfter 13. Im Regenerierungsluftstrom 1' befindet sich stromauf der Heizeinrichtung 10 der zusätzliche, zweite Lüfter 8, der jedoch auch stromab des Sorptionsmittels 5 angeordnet sein kann.

Stromab des Sorptionsmittels 5 ist ein 2/2 Wegeventil 23 angeordnet. Gemäß Figur 4, in der ersten Stellung des 3/2 Wegeventils 23 wird der Teilluftstrom 1a über eine Verbindungsleitung 24 stromab der Kondensationseinrichtung 6 bevorzugt stromab des Lüfters 8 mit der Umgehungsleitung 22 vereinigt. In dieser ersten Stellung des 3/2 Wegeventils befindet sich die Dunstabzugseinrichtung im Dunstabzugsbetrieb, wobei eine große Menge an Luft oberhalb einer Kochstelle abgesaugt, gereinigt und entwässert und im Anschluss daran in den Raum zurückgeleitet wird.

In einer zweiten Stellung des 3/2 Wegeventils 23 (gemäß Figur 5) wird die Hauptleitung 3 über eine Verbindungsleitung 25 mit der Kondensationseinrichtung 6 verbunden. Die Kondensationseinrichtung 6 ist wiederum über eine Rückleitung 26 stromauf des Sorptionsmittels 5 mit der Hauptleitung 3 verbunden. Die Kondensationseinrichtung 6 ist mit einem Ablaufventil 28 und einem Ablauf 16 versehen. Gemäß Figur 5 ist die Dunstabzugseinrichtung im Regenerierungsbetrieb dargestellt, bei dem nur ein geringer Luftstrom durch die Hauptleitung 3 über die Heizeinrichtung 10, das Sorptionsmittel 5, das 3/2 Wegeventil 23, die Kondensationseinrichtung 6, die Rückleitung 26 im Kreislauf geführt wird, und über die Umgehungsleitung 22 Umgebungsluft zur Kühlung der Kondensationseinrichtung 6 geleitet wird.

Gemäß Figur 4 erfolgt die Aufteilung des Luftstroms 1 in den ersten 1a und den zweiten Teilluftstrom 1b über das vorwählbare Verhältnis der Fördermengen des Lüfters 8 und des Lüfters 13.

Die Merkmale der vorstehend dargestellten Ausführungen der Dunstabzugseinrichtungen mit ihren Abwandlungen sind untereinander frei kombinierbar. Beispielsweise können die Ausführungen nach Figur 1 und 2 auch mit der Umgehungsleitung 22 gemäß der Ausfügungen nach Figur 3 bis 5 versehen sein. Auch können die Ausführungen nach Figur 1 und 2 mit Zeolith als Sorptionsmittel betrieben werden.

## Patentansprüche

1. Verfahren zum Abführen eines Luftstroms (1) von einer Kochstelle mit den Schritten,
- Leiten des Luftstroms (1) durch ein Sorbtionsmittel (5) zum Sorbieren von im Luftstrom (1) bei einem Kochvorgang befindlichem Wasser oder Wasserdampf
- Regenerieren des Sorbtionsmittels (5) durch Desorbieren des Sorbtionsmittels (5) durch Erwärmen des Sorbtionsmittels (5) auf eine Temperatur, die zum Desorbieren von Wasser aus dem verwendeten Sorbtionsmittel (5) geeignet ist,
wobei während des Regenerierungsvorgangs ein Regenerierungsluftstroms (1') durch das Sorbtionsmittel (5) erzeugt wird und die im Regenerierungsluftstrom (1') befindliche Feuchtigkeit mittels einer Kondensationseinrichtung (6) auskondensiert wird, und wobei der Regenerierungsluftstrom (1') stromauf des Sorbtionsmittels (5) in einen ersten Regenerierungsteilluftstrom (1'a) und einen zweiten Regenerierungsteilluftstrom (1'b) geteilt wird, der erste Regenerierungsteilluftstrom (1'a) durch das Sorbtionsmittel (5) geleitet wird, der zweite Regenerierungsteilluftstrom (1'b) um das Sorbtionsmittel (5) herum geleitet wird, der erste Regenerierungsteilluftstrom (1'a) auf die Eintrittsseite des Sorbtionsmittels (5) zurückgeführt wird, und der zweite Regenerierungsteilluftstrom (1'b) als Kühlluftstrom durch die Kondensationseinrichtung (6) geleitet wird.

2. Verfahren nach Anspruch 1,
**gekennzeichnet durch** Abführen des Luftstroms (1) beim Kochvorgang aus einem Raum und Zurückleiten zumindest eines Teils des Luftstroms (1) stromab des Sorbtionsmittels (5) in den Raum.

3. Verfahren nach Anspruch 1 oder 2,
**gekennzeichnet durch** Abscheiden von im Luftstrom (1) beim Kochvorgang befindlichem Fett und Öl stromauf des Sorbtionsmittels (5) mittels eines Fettfilters (4).

4. Verfahren nach einem der Ansprüche 1 bis 3,
**gekennzeichnet durch** Abscheiden von im Luftstrom (1) beim Kochvorgang befindlichen Geruchsstoffen mittels eines Geruchsfilters (7) bevorzugt stromab des Fettfilters (4) oder bei Verwenden eines Sorbtionsmittels (5), das auch Gerüche abscheiden kann, mittels des Sorbtionsmittels (5).

5. Verfahren nach einem der Ansprüche 1 bis 4,
**gekennzeichnet durch** Teilen des Luftstroms (1) beim Kochvorgang stromauf des Sorbtionsmittels (5) in einen ersten (1 a) und einen zweiten Teilluftstrom (1 b),
Leiten des ersten Teilluftstroms (1a) **durch** das Sorbtionsmittel (5), und
Leiten des zweiten Teilluftstroms (1b) um das Sorbtionsmittel (5) herum, und
Zusammenführen des ersten (1a) und zweiten Teilluftstroms (1b) stromab des Sorbtionsmittels (5) und Zurückleiten des zusammengeführten ersten (1a) und zweiten Teilluftstroms (1 b) in den Raum.

6. Verfahren nach Anspruch 5,
**gekennzeichnet durch** Einstellen der Restfeuchtigkeit des zusammengeführten Luftstroms (1) beim Kochvorgang **durch** Einstellen des Volumenstromverhältnisses zwischen dem ersten Teilluftstrom (1a) und dem zweiten Teilluftstrom (1b) bevorzugt auf ein Verhältnis, so dass der zusammengeführte Luftstrom einen Feuchtigkeitsgrad hat, der dem Feuchtigkeitsgrad ohne Kochvorgang entspricht.

7. Verfahren nach einem der Ansprüche 1 bis 6,
**gekennzeichnet durch** Sorbieren des Wassers oder des Wasserdampfes mittels CaCl₂ und/oder LiCl und/oder Silicagel und/oder Zeolith.

8. Verfahren nach einem der Ansprüche 1 bis 7,
**gekennzeichnet durch** Regenerieren des Sorbtionsmittels (5) wenn keine Abführung eines Luftstroms (1) über der Kochstelle erforderlich ist.

9. Verfahren nach einem der Ansprüche 1 bis 8,
**dadurch gekennzeichnet, dass** der Regenerierungsluftstrom (1') geringer als der Luftstrom (1) beim Kochvorgang ist.

10. Verfahren nach einem der vorstehenden Ansprüche 1 bis 9,
**gekennzeichnet durch** Erwärmen des Sorbtionsmittels (5) während des Regenerierens direkt mittels im Sorbtionsmittel (5) eingebetteter Heizeinrichtung (10), bevorzugt in Form von Heizschlangen oder indirekt bevorzugt **durch** Mikrowellenstrahlung, die auf Wasser abgestimmt ist, oder indirekt **durch** Erwärmen des Regenerierungsluftstroms (1') stromauf des Sorbtionsmittels (5).

11. Verfahren nach einem der vorstehenden Ansprüche 1 bis 10,
**gekennzeichnet durch** Zurückführen des Regenerierungsluftstroms (1') in den Raum, um den Raum zu befeuchten, bevorzugt im Winter.

12. Verfahren nach Anspruch 11,
**gekennzeichnet durch** Kühlen der Kondensationseinrichtung (6) mittels Raumluft oder Außenluft oder Wasser bevorzugt aus dem Hauswassersystem oder mittels einer Wärmepumpe bevorzugt eines Kältekreislaufs oder eines Peltierelementes.

13. Verfahren nach einem der vorstehenden Ansprüche 1 bis 12,
**gekennzeichnet durch** Leiten des zweiten Regenerierungsteilluftstroms (1'b) stromab der Kondensationseinrichtung (6) zurück in den Raum.

14. Verfahren nach einem der vorstehenden Ansprüche 1 bis 13,
**gekennzeichnet durch** Abführen des kondensierten Wassers in einen Ablauf oder einen Speicherbehälter.

15. Dunstabzugseinrichtung zum Durchführen eines Verfahrens nach einem der Ansprüche 1 bis 14, mit einem Gehäuse (2), einem Lüfter (8) zum Fördern des Luftstroms (1) durch die Dunstabzugseinrichtung und einem im Luftstrom (1) angeordneten Sorbtionsmittel (5) zum Sorbieren von im Luftstrom (1) bei einem Kochvorgang befindlichem Wasser oder Wasserdampf,
wobei die Dunstabzugseinrichtung eine Regenerationseinrichtung zum Desorbieren von Wasser aus dem Sorbtionsmittel (5) umfasst und die Regenerationseinrichtung aufweist:
- eine Heizeinrichtung (10),
- eine Kondensationseinrichtung (6) in Form eines Wärmetauschers (12), **dadurch gekennzeichnet, dass** die Dunstabzugseinrichtung ferner aufweist:
- eine Luft-Teilungseinrichtung, um das Volumenstromverhältnis zwischen einem ersten Regenerierungsteilluftstrom (1'a) in einer Hauptleitung (3) durch das Sorbtionsmittel (5) und einem zweiten Regenerierungsteilluftstrom (1'b) in einer Umgehungsleitung (22) um das Sorbtionsmittel (5) herum einzustellen, und
- eine Verbindungsleitung (26) vom Wärmetauscher (12) zur Hauptleitung (3) stromauf der Heizeinrichtung (10), zum Weiterleiten des ersten Regenerierungsteilluftstroms (1'a).

16. Dunstabzugseinrichtung nach Anspruch 15, **dadurch gekennzeichnet, dass** ein Fettfilter (4) bevorzugt ein Streckmetallfilter und/oder ein Vliesfilter und/oder ein Wirbelstromfilter zum Abscheiden von Fett, Öl und Kondenswasser aus dem Luftstrom (1) bevorzugt stromauf des Sorbtionsmittels (5) vorgesehen ist.

17. Dunstabzugseinrichtung nach Anspruch 15 oder 16; **dadurch gekennzeichnet, dass** ein Geruchsfilter (7) bevorzugt ein Aktivkohlefilter zum Abscheiden von Gerüchen aus dem Luftstrom bevorzugt stromab des Fettfilters vorgesehen ist.

18. Dunstabzugseinrichtung nach einem der Ansprüche 15 bis 17, **dadurch gekennzeichnet, dass** der Lüfter einen Regenerierungsluftstrom durch das Sorbtionsmittel (5) aufbaut, der kleiner als der Luftstrom ist.

19. Dunstabzugseinrichtung nach Anspruch 18, **dadurch gekennzeichnet, dass** die Kondensationseinrichtung (6) eine Außenwand des Gehäuses (2) der Dunstabzugseinrichtung umfasst und die Außenwand durch freie Konvektion der Raumluft an der Außenseite der Außenwand gekühlt wird und auf der Innenseite der Außenwand Wasser kondensiert wird.

20. Dunstabzugseinrichtung nach Anspruch 19, **dadurch gekennzeichnet dass** die Kondensationseinrichtung (6) eine Kühleinrichtung hat, wobei die Kühleinrichtung einen zweiten Lüfter (13) zum Kühlen der Kondensationseinrichtung (6) mittels Umgebungsluft hat.

21. Dunstabzugseinrichtung nach Anspruch 20, **dadurch gekennzeichnet, dass** die Kühleinrichtung einen Kältekreislauf oder ein Peltierelement umfasst, wobei bevorzugt eine Luftleiteinrichtung zwischen der warmen Seite des Kältekreislaufs oder des Peltierelementes und des Sorbtionsmittels (5) vorgesehen ist, um von der warmen Seite des Kältekreislaufs oder des Peltierelementes aufgeheizte Luft zum Heizen des Sorbtionsmittels (5) beim Regenerierungsvorgang zu verwenden.

22. Dunstabzugseinrichtung nach einem der Ansprüche 19 bis 21, **dadurch gekennzeichnet, dass** an der Kondensationseinrichtung (6) eine Kondensatsammeleinrichtung bevorzugt in Form einer Rinne (15) oder Wanne vorgesehen ist, die mit einem Ablauf (16) oder einem Sammelbehälter verbunden ist.

23. Dunstabzugseinrichtung nach einem der Ansprüche 15 bis 22, **dadurch gekennzeichnet, dass** das Sorbtionsmittel (5) als Schüttgut in einem luftdurchlässigen Schüttgutbehälter vorgesehen ist, oder dass das Sorbtionsmittel (5) als poröser Formkörper ausgebildet ist, oder dass das Sorbtionsmittel (5) als eine Mehrzahl plattenartiger poröser Formkörper oder als eine Mehrzahl plattenartigen flacher Schüttgutbehälter vorgesehen ist, die in Strömungsrichtung hintereinander oder parallel angeordnet sind.

24. Dunstabzugseinrichtung nach Anspruch 23, **dadurch gekennzeichnet, dass** das Sorbtionsmittel (5) an einem porösen Trägermaterial wie einem offenporigen Schwamm, einem Fließmaterial oder einem Textil anhaftet, das zur Ausbildung einer großen Oberfläche bevorzugt gewellt oder wabenartig ausgebildet ist.

25. Dunstabzugseinrichtung nach Anspruch 24, **dadurch gekennzeichnet, dass** mehrere mit Sorbtionsmittel (5) versehene Trägermaterialien in Strömungsrichtung hintereinander oder parallel angeordnet sind.

26. Dunstabzugseinrichtung nach einem der Ansprüche 15 bis 25, **dadurch gekennzeichnet, dass** das Sorbtionsmittel (5) gebildet wird durch CaCl₂ und/oder LiCl und/oder Silicagel und/oder Zeolith und/oder SWS (Selektives - Wasser - Sorbens).

27. Dunstabzugseinrichtung nach einem der Ansprüche 15 bis 26, **dadurch gekennzeichnet, dass** die Luft-Teilungseinrichtung durch ein Drosselventil gebildet wird, das bevorzugt in der Hauptleitung (3) stromab des Sorbtionsmittels (5) angeordnet ist.

28. Dunstabzugseinrichtung nach einem der Ansprüche 15 bis 27, **dadurch gekennzeichnet, dass** der Wärmetauscher (12) in der Umgehungsleitung (22) angeordnet ist und, dass eine Ventileinrichtung (23) stromab des Sorbtionsmittels (5) in der Hauptleitung (3) vorgesehen ist, die in einer ersten Stellung eine Verbindung zur Umgehungsleitung (22) stromab des Wärmetauschers (12) herstellt und in einer zweiten Stellung den Regenerierungsluftstrom (1'a) zum Wärmetauscher (12) leitet.

## Claims

1. Method of conducting an air flow (1) away from a cooking position, comprising the steps:
- conducting the air flow (1) through a sorption medium (5) for sorption of water or water steam present in the air flow (1) during a cooking process,
- regenerating the sorption medium (5) by desorbing the sorption medium (5) by heating the sorption medium (5) to a temperature suitable for desorption of water from the sorption medium (5) employed,
wherein during the regenerating process a regenerating air flow (1') through the sorption medium (5) is produced and the moisture present in the regenerating air flow (1') is condensed out by means of a condensing device (6), and wherein the regenerating air flow (1') is divided upstream of the sorption medium (5) into a first regenerating part air flow (1'a) and a second regenerating part air flow (1'b), the first regenerating part air flow (1'a) is conducted through the sorption medium (5), the second regenerating part air flow (1'b) is conducted around the sorption medium (5), the first regenerating part air flow (1'a) is returned to the entry side of the sorption medium (5) and the second regenerating part air flow (1'b) is conducted as cooling air flow through the condensing device (6).

2. Method according claim 1, **characterised by** conducting the air flow (1) during a cooking process away from a room and conducting at least a part of the air flow (1) downstream of the sorption medium (5) back into the room.

3. Method according to claim 1 or 2, **characterised by** separating out grease and oil, which are present in the air flow (1) during the cooking process, upstream of the sorption medium (5) by means of a grease filter (4).

4. Method according to any one of claims 1 to 3, **characterised by** separation out of odours, which are present in the air flow (1) during the cooking process, by means of a odour filter (7) preferably downstream of the grease filter (4) or, in the case of use of a sorption medium (5) which can also separate out odours, by way of the sorption medium (5).

5. Method according to any one of claims 1 to 4, **characterised by** division of the air flow (1) during the cooking process upstream of the sorption medium (5) into a first part air flow (1 a) and a second part air flow (1 b), conducting the first part air flow (1 a) through the sorption medium (5), conducting the second part air flow (1 b) around the sorption medium (5), combining the first part air flow (1 a) and second part air flow (1 b) downstream of the sorption medium (5) and conducting the combined first part air flow (1 a) and second part air flow (1 b) back into the room.

6. Method according to claim 5, **characterised by** setting the residual moisture of the combined air flow (1) during the cooking process by setting the volume flow ratio between the first part air flow (1 a) and the second part air flow (1 b), preferably to a ratio so that the combined air flow has a degree of moisture corresponding with the degree of moisture without a cooking process.

7. Method according to any one of claim 1 to 6, **characterised by** sorption of the water or the water steam by means of CaCl₂ and/or LiCi and/or silica gel and/or zeolite.

8. Method according to any one of claims 1 to 7, **characterised by** regenerating the sorption medium (5) if no conducting away of an air flow (1) over the cooking position is required.

9. Method according to any one of claims 1 to 8, **characterised in that** the regenerating air flow (1') is smaller than the air flow (1) during the cooking process.

10. Method according to any one of the preceding claims 1 to 9, **characterised by** heating the sorption medium (5), during the regenerating, directly by means of a heating device (10) embedded in the sorption medium (5), preferably in the form of heating coils, or indirectly preferably by microwave radiation, which is adapted to water, or indirectly by heating the regenerating air flow (1') upstream of the sorption medium (5).

11. Method according to any one of the preceding claims 1 to 10, **characterised by** returning the regenerating air flow (1') to the room in order to humidify the room, preferably in winter.

12. Method according to claim 11, **characterised by** cooling the condensing device (6) by means or room air or outside air or water preferably from the domestic water system or by means of a heat pump, preferably of a refrigerating circuit or a Peltier element.

13. Method according to any one of the preceding claims 1 to 12, **characterised by** conducting the second regenerating part air flow (1'b) downstream of the condensing device (6) back into the room.

14. Method according to any one of the preceding claims 1 to 13, **characterised by** conducting condensed water away into an outflow or a storage container.

15. Fume extractor for performance of a method according to any one of claims 1 to 14, comprising a housing (2), a fan (8) for conveying the air flow (1) through the fume extractor and a sorption medium (5), which is arranged in the air flow (1), for sorption of water or water steam present in the air flow (1) during the cooking process, wherein the fume extractor comprises a regenerating device for desorbing water from the sorption medium (5) and the regenerating device comprises:
- a heating device (10),
- a condensing device (6) in the form of a heat exchanger (12),
**characterised in that** the fume extractor further comprises:
- an air dividing device to set the volume flow ratio between a first regenerating part air flow (1'a) in a main duct (3) through the sorption medium (5) and a second regenerating part air flow (1'b) in a bypass duct (22) around the sorption medium (5) and
- a connecting duct (26) from the heat exchanger (12) to the main duct (3) upstream of the heating device (10) for conducting on the first regenerating part air flow (1'a).

16. Fume extractor according to claim 15, **characterised in that** a grease filter (4), preferably an expanded-metal filter and/or a non-woven material filter and/or a cyclonic filter, for separation of grease, oil and condensation water from the air flow (1) is provided, preferably upstream of the sorption medium (5).

17. Fume extractor according to claim 15 or 16, **characterised in that** an odour filter (7), preferably an activated carbon filter, for separation of odours from the air flow is provided, preferably downstream of the grease filter.

18. Fume extractor according to any one of claims 15 to 17, **characterised in that** the fan builds up a regenerating air flow, which is smaller than the air flow, through the sorption medium (5).

19. Fume extractor according to claim 18, **characterised in that** the condensing device (6) comprises an outer wall of the housing (2) of the fume extractor and the outer wall is cooled by free convection of the room air at the outer side of the outer wall and water is condensed on the inner side of the outer wall.

20. Fume extractor according to claim 19, **characterised in that** the condensing device (6) has a cooling device, wherein the cooling device has a second fan (13) for cooling the condensing device (6) by means of ambient air.

21. Fume extractor according to claim 20, **characterised in that** the cooling device comprises a refrigerating circuit or a Peltier element, wherein preferably an air guide device is provided between the warm side of the refrigerating circuit or of the Peltier element and the sorption medium (5) in order to use air, which is heated by the warm side of the refrigerating circuit or the Peltier element, for heating the sorption medium (5) during the regenerating process.

22. Fume extractor according to any one of claims 19 to 21, **characterised in that** a condensate collecting device, preferably in the form of a channel (15) or trough, which is connected with an outflow (16) or a collecting container, is provided at the condensing device (6).

23. Fume extractor according to any one of claims 15 to 22, **characterised in that** the sorption medium (5) is provided as flowable material in an air permeable flowable material container, or that the sorption medium (5) is constructed as a porous moulded body, or that the sorption medium (5) is provided as a plurality of plate-like porous moulded bodies or as a plurality of plate-like flat flowable material containers, which are arranged one behind the other in flow direction or in parallel.

24. Fume extractor according to claim 23, **characterised in that** the sorption medium (5) adheres to a porous carrier material such as an open-pore sponge, a non-woven material or a textile, which for formation of a large surface is preferably of wavy or honeycomb construction.

25. Fume extractor according to claim 24, **characterised in that** several carrier materials provided with sorption medium (5) are arranged one behind the other in flow direction or in parallel.

26. Fume extractor according to any one of claims 15 to 25, **characterised in that** the sorption medium (5) is formed by CaCl₂ and/or LiCi and/or silica gel and/or zeolite and/or SWS (Selective Water Sorbent).

27. Fume extractor according to any one of claims 15 to 26, **characterised in that** the air dividing device is formed by a throttle valve which is preferably arranged in the main duct (3) downstream of the sorption medium (5).

28. Fume extractor according to any one of claims 15 to 27, **characterised in that** the heat exchanger (12) is arranged in the bypass duct (22) and that a valve device (23) is provided in the main duct (3) downstream of the sorption medium (5), which valve device in a first setting produces a connection with the bypass duct (22) downstream of the heat exchanger (12) and in a second setting conducts the regenerating air flow (1'a) to the heat exchanger (12).

## Revendications

1. Procédé d'évacuation d'un courant d'air (1) d'une zone de cuisson, comprenant les étapes de
- guidage du courant d'air (1) à travers un adsorbant (5) pour adsorber l'eau ou la vapeur d'eau présente dans le courant d'air (1) lors d'un processus de cuisson,
- régénération de l'adsorbant (5) par désorption de l'adsorbant (5) en chauffant l'adsorbant (5) à une température adaptée pour désorber l'eau de l'adsorbant (5) utilisé, un courant d'air de régénération (1') étant généré à travers l'adsorbant (5) pendant le processus de régénération et l'humidité présente dans le courant d'air de régénération (1') étant condensée au moyen d'un dispositif de condensation (6) et le courant d'air de régénération (1') étant divisé, en amont de l'adsorbant (5), en un premier courant d'air partiel de régénération (1'a) et un second courant d'air partiel de régénération (1'b), le premier courant d'air partiel de régénération (1'a) étant guidé à travers l'adsorbant (5), le second courant d'air partiel de régénération (1'b) étant guidé de façon à contourner l'adsorbant (5), le premier courant d'air partiel de régénération (1'a) étant ramené sur le côté d'entrée de l'adsorbant (5) et le second courant d'air partiel de régénération (1'b) étant guidé à travers le dispositif de condensation (6) en tant que courant d'air de refroidissement.

2. Procédé selon la revendication 1,
**caractérisé par** l'évacuation du courant d'air (1) d'un espace lors du processus de cuisson et le retour d'au moins une partie du courant d'air (1) dans l'espace en aval de l'adsorbant (5).

3. Procédé selon la revendication 1 ou 2,
**caractérisé par** la séparation de la graisse et de l'huile présentes dans le courant d'air
(1) lors du processus de cuisson au moyen d'un filtre à graisses (4) en amont de l'adsorbant (5).

4. Procédé selon l'une des revendications 1 à 3,
**caractérisé par** la séparation de substances odorantes présentes dans le courant d'air
(1) lors du processus de cuisson au moyen d'un filtre à odeurs (7) de préférence en aval du filtre à graisses (4), ou au moyen de l'adsorbant (5) en utilisant un adsorbant (5) capable de séparer également les odeurs.

5. Procédé selon l'une des revendications 1 à 4,
**caractérisé par** la division du courant d'air (1) en un premier (1a) et un second (1 b) courants d'air partiels en amont de l'adsorbant (5) lors du processus de cuisson, le guidage du premier courant d'air partiel (1a) à travers l'adsorbant (5) et le guidage du second courant d'air partiel (1 b) de façon à contourner l'adsorbant (5) et la réunion du premier (1a) et du second (1 b) courants d'air partiels en aval de l'adsorbant (5) et le retour du premier (1a) et du second (1 b) courants d'air partiels réunis dans l'espace.

6. Procédé selon la revendication 5,
**caractérisé par** le réglage de l'humidité résiduelle du courant d'air réuni (1) lors du processus de cuisson en réglant le rapport de débit volumique entre le premier courant d'air partiel (1a) et le second courant d'air partiel (1b) de manière à avoir, de préférence, un rapport tel que le courant d'air réuni ait un degré d'humidité qui corresponde au degré d'humidité en l'absence d'un processus de cuisson.

7. Procédé selon l'une des revendications 1 à 6,
**caractérisé par** l'adsorption de l'eau ou de la vapeur d'eau au moyen de CaCl₂ et/ou de Li/Cl et/ou de gel de silice et/ou de zéolite.

8. Procédé selon l'une des revendications 1 à 7,
**caractérisé par** la régénération de l'adsorbant (5) lorsqu'aucune évacuation d'un courant d'air (1) au-dessus de la zone de cuisson n'est nécessaire.

9. Procédé selon l'une des revendications 1 à 8,
**caractérisé en ce que** le courant d'air de régénération (1') est plus réduit que le courant d'air (1) lors du processus de cuisson.

10. Procédé selon l'une des revendications précédentes 1 à 9,
**caractérisé par** un chauffage de l'adsorbant (5) pendant la régénération directement au moyen d'un dispositif de chauffage (10) intégré dans l'adsorbant (5), de préférence sous forme de serpentins réchauffeurs, ou indirectement de préférence grâce à un rayonnement micro-ondes qui est adapté à l'eau ou indirectement en chauffant le courant d'air de régénération (1') en amont de l'adsorbant (5).

11. Procédé selon l'une des revendications précédentes 1 à 10,
**caractérisé par** le retour du courant d'air de régénération (1') dans l'espace pour humidifier l'espace, de préférence en hiver.

12. Procédé selon la revendication 11,
**caractérisé par** un refroidissement du dispositif de condensation (6) au moyen de l'air ambiant ou d'air extérieur ou d'eau provenant de préférence du circuit d'eau domestique ou au moyen d'une pompe à chaleur, de préférence d'un circuit frigorifique ou d'un élément Peltier.

13. Procédé selon l'une des revendications précédentes 1 à 12,
**caractérisé par** le guidage du second courant d'air partiel de régénération (1'b) pour retourner dans l'espace en aval du dispositif de condensation (6).

14. Procédé selon l'une des revendications précédentes 1 à 13,
**caractérisé par** l'évacuation de l'eau condensée dans un égout ou un réservoir de stockage.

15. Dispositif d'évacuation de fumées pour exécuter un procédé selon l'une des revendications 1 à 14, comprenant une enveloppe (2), un ventilateur (8) pour refouler le courant d'air (1) à travers le dispositif d'évacuation de fumées et un adsorbant (5) situé dans le courant d'air (1) pour adsorber l'eau ou la vapeur d'eau présente dans le courant d'air (1) lors d'un processus de cuisson,
le dispositif d'évacuation de fumées comprenant un dispositif de régénération pour désorber l'eau de l'adsorbant (5) et le dispositif de régénération comprenant :
- un dispositif de chauffage (10),
- un dispositif de condensation (6) sous forme d'un échangeur thermique (12),
**caractérisé en ce que** le dispositif d'évacuation de fumées comprend, en outre :
- un dispositif de division de l'air pour régler le rapport de débit volumique entre un premier courant d'air partiel de régénération (1'a) dans une conduite principale (3), qui traverse l'adsorbant (5), et un second courant d'air partiel de régénération (1'b) dans une conduite de contournement (22), qui contourne l'adsorbant (5), et
- une conduite de liaison (26) menant de l'échangeur thermique (12) vers la conduite principale (3) en amont du dispositif de chauffage (10) pour acheminer le premier courant d'air partiel de régénération (1'a).

16. Dispositif d'évacuation de fumées selon la revendication 15,
**caractérisé en ce qu'**un filtre à graisses (4), de préférence un filtre en métal déployé et/ou un filtre non-tissé et/ou un filtre à tourbillon, est prévu, de préférence en amont de l'adsorbant (5), pour séparer la graisse, l'huile et l'eau condensée du courant d'air (1).

17. Dispositif d'évacuation de fumées selon la revendication 15 ou 16,
**caractérisé en ce qu'**un filtre à odeurs (7), de préférence un filtre au charbon actif, est prévu, de préférence en aval du filtre à graisses, pour séparer les odeurs du courant d'air.

18. Dispositif d'évacuation de fumées selon l'une des revendications 15 à 17,
**caractérisé en ce que** le ventilateur génère à travers l'adsorbant (5) un courant d'air de régénération qui est plus petit que le courant d'air.

19. Dispositif d'évacuation de fumées selon la revendication 18,
**caractérisé en ce que** le dispositif de condensation (6) comprend une paroi extérieure de l'enveloppe (2) du dispositif d'évacuation de fumées et la paroi extérieure est refroidie par convection libre de l'air ambiant sur le côté extérieur de la paroi extérieure et l'eau est condensée sur le côté intérieur de la paroi extérieure.

20. Dispositif d'évacuation de fumées selon la revendication 19,
**caractérisé en ce que** le dispositif de condensation (6) comprend un dispositif de refroidissement, le dispositif de refroidissement étant pourvu d'un second ventilateur (13) pour refroidir le dispositif de condensation (6) au moyen de l'air environnant.

21. Dispositif d'évacuation de fumées selon la revendication 20,
**caractérisé en ce que** le dispositif de refroidissement comprend un circuit frigorifique ou un élément Peltier, un dispositif de guidage de l'air étant prévu de préférence entre le côté chaud du circuit frigorifique ou de l'élément Peltier et l'adsorbant (5) pour utiliser l'air chauffé par le côté chaud du circuit frigorifique ou de l'élément Peltier pour chauffer l'adsorbant (5) lors du processus de régénération.

22. Dispositif d'évacuation de fumées selon l'une des revendications 19 à 21,
**caractérisé en ce que** l'on prévoit, au niveau du dispositif de condensation (6), un dispositif de recueil du condensat, de préférence sous forme d'une gouttière (15) ou d'une cuve, qui est relié à un égout (16) ou un réservoir collecteur.

23. Dispositif d'évacuation de fumées selon l'une des revendications 15 à 22,
**caractérisé en ce que** l'adsorbant (5) est prévu en tant que matière en vrac dans un récipient pour matière en vrac perméable à l'air ou **en ce que** l'adsorbant (5) est exécuté en tant que corps moulé poreux ou **en ce que** l'adsorbant (5) est prévu en tant que pluralité de corps moulés poreux semblables à des plaques ou en tant que pluralité de récipients pour matière en vrac plats semblables à des plaques qui sont disposés les uns derrière les autres ou parallèlement dans la direction de l'écoulement.

24. Dispositif d'évacuation de fumées selon la revendication 23,
**caractérisé en ce que** l'adsorbant (5) adhère à un matériau de support poreux tel qu'une mousse alvéolaire, une matière coulante ou un textile, qui est exécuté de préférence de manière à être ondulé ou à former des nids d'abeilles afin d'obtenir une surface importante.

25. Dispositif d'évacuation de fumées selon la revendication 24,
**caractérisé en ce que** plusieurs matériaux de support pourvus d'adsorbant (5) sont disposés les uns derrière les autres ou parallèlement dans la direction de l'écoulement.

26. Dispositif d'évacuation de fumées selon l'une des revendications 15 à 25,
**caractérisé en ce que** l'adsorbant (5) est formé de CaCl₂ et/ou de Li/Cl et/ou de gel de silice et/ou de zéolite et/ou d'un adsorbant sélectif de l'eau (SWS).

27. Dispositif d'évacuation de fumées selon l'une des revendications 15 à 26,
**caractérisé en ce que** le dispositif de division de l'air est formé par une vanne papillon qui est disposée de préférence dans la conduite principale (3) en aval de l'adsorbant (5).

28. Dispositif d'évacuation de fumées selon l'une des revendications 15 à 27, **caractérisé en ce que** l'échangeur thermique (12) est situé dans la conduite de contournement (22) et **en ce qu'**un dispositif de soupape (23) est prévu dans la conduite principale (3) en aval de l'adsorbant (5), dispositif qui, dans une première position, établit une liaison vers la conduite de contournement (22) en aval de l'échangeur thermique (12) et, dans une seconde position, guide le courant d'air de régénération (1'a) vers l'échangeur thermique (12).
